(19) Europäisches Patentamt
European Patent Office
Office européen des brevets

(11) **EP 4 411 415 A1**

(12) **EUROPEAN PATENT APPLICATION**

(43) Date of publication:
**07.08.2024 Bulletin 2024/32**

(21) Application number: **23217596.8**

(22) Date of filing: **18.12.2023**

(51) International Patent Classification (IPC):
**G01S 7/4865** (2020.01)    **G01S 7/487** (2006.01)
**G01S 17/14** (2020.01)    **G01S 17/88** (2006.01)

(52) Cooperative Patent Classification (CPC):
**G01S 7/4865; G01S 7/4873; G01S 17/14;
G01S 17/88**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2023 JP 2023013295
07.07.2023 JP 2023112554**

(71) Applicant: **Omron Corporation
Kyoto-shi, Kyoto 600-8530 (JP)**

(72) Inventors:
• **TOMAGO, Norihiro
Kyoto-shi, Kyoto 6008530 (JP)**
• **ANDO, Shintaro
Kyoto-shi, Kyoto 6008530 (JP)**
• **TSUZUKI, Ryosuke
Kyoto-shi, Kyoto 6008530 (JP)**

(74) Representative: **Bardehle Pagenberg
Partnerschaft mbB
Patentanwälte Rechtsanwälte
Prinzregentenplatz 7
81675 München (DE)**

(54) **SENSOR DEVICE**

(57)    To provide a sensor device (100) capable of more accurately detecting a target using rough measurement and fine measurement. A sensor device (100) includes: a light emitter (10) configured to emit detection light toward a target; a light receiver (20) configured to receive reflected light of the detection light and generates a binarization signal; a counter measurer (32) configured to generate first and second timings on a basis of the binarization signal; a delay line (33) configured to receive and propagate the binarization signal; first and second memories configured to record binarization signals propagated through the delay line (33) on a basis of the first and second timing, respectively, the binarization signals each being the binarization signal; an integrator (34) configured to generate first and second sets of integrated waveform data by integrating the binarization signals recorded in the first and second memories, respectively, corresponding to a plurality of times of light emission in the light emitter (10); a distance converter (38) configured to calculate a measured distance value to the target on a basis of the first and second sets of integrated waveform data; and a determiner (51) configured to determine presence or absence of the target on a basis of the measured distance value.

FIG. 1

EP 4 411 415 A1

**Description**

CROSS-REFERENCE TO RELATED APPLICATION

This application is based on Japanese Patent Application No. 2023-112554 filed with the Japan Patent Office on July 7, 2023, the entire contents of which are incorporated herein by reference.

FIELD

The present invention relates to a sensor device.

BACKGROUND

Conventionally, as a photoelectric sensor, the following is known: a photoelectric sensor including: a light emitting element that repeatedly generates detection light; a light receiving element that receives reflected light of the detection light; a binarization processor that binarizes a light reception signal; a waveform detector that detects waveform data indicating a temporal change of the binarized light reception signal; a waveform integrator that integrates two or more sets of waveform data by aligning light emission timings of the light emitting element and generates integrated waveform data; and a workpiece determiner that determines the presence or absence of a workpiece on the basis of the integrated waveform data (cf. Japanese Unexamined Patent Publication No. 2015-75453). This photoelectric sensor can detect a workpiece by sampling reflected light at a high speed while reducing a circuit scale.

Further, a sensor device of Japanese Unexamined Patent Publication No. 2020-71098 performs rough measurement over the entire measurement range and performs fine measurement around a measurement point searched by the rough measurement, thereby measuring the vicinity of the target with high accuracy.

However, the photoelectric sensor of Japanese Unexamined Patent Publication No. 2015-75453 obtains the distance to the target by measuring the time from the transmission timing of a transmission signal to the reception of a reflected signal, and determines whether or not the target is at a desired set distance. Hence there is a concern that the detection accuracy of the target depends on the reflectance of the target. In addition, although the sensor device of Japanese Unexamined Patent Publication No. 2020-71098 can accurately detect the target without depending on the reflectance of the target, more accurate detection is required.

SUMMARY

Therefore, an object of the present invention is to provide a sensor device capable of detecting a target more accurately using rough measurement and fine measurement.

A sensor device according to one aspect of the present invention includes: a light emitter configured to emit detection light toward a target; a light receiver configured to receive reflected light of the detection light and generates a binarization signal; a counter measurer configured to generate first and second timings on the basis of the binarization signal; a delay line configured to receive and propagate the binarization signal; first and second memories configured to record binarization signals propagated through the delay line on the basis of the first and second timing, respectively, the binarization signals each being the binarization signal; an integrator configured to generate first and second sets of integrated waveform data by integrating the binarization signals recorded in the first and second memories, respectively, corresponding to a plurality of times of light emission in the light emitter; a distance converter configured to calculate a measured distance value to the target on the basis of the first and second sets of integrated waveform data; and a determiner configured to determine presence or absence of the target on the basis of the measured distance value.

According to this aspect, the counter measurer generates the first and second timings on the basis of the binarization signal, and the first and second memories record the binarization signals propagated through the delay line on the basis of the first and second timing, respectively. The integrator generates first and second sets of integrated waveform data by integrating the binarization signals recorded in the first and second memories corresponding to a plurality of times of light emission in the light emitter. Then, the distance converter calculates the measured distance value to the target on the basis of the first and second sets of integrated waveform data, thereby enabling appropriate calculation of the measured distance value to the target. As a result, the target can be detected more accurately.

In the above aspect, the distance converter may calculate the measured distance value to the target, using one of the first and second sets of integrated waveform data according to a predetermined section.

According to this aspect, the distance converter calculates the measured distance value to the target using the appropriate integrated waveform data of the first and second sets of integrated waveform data according to the predetermined section, thus enabling more appropriate calculation of the measured distance value to the target. For example, when different sets of integrated waveform data are used, the measured distance value to the target can be appropriately calculated even at the boundary.

In the above aspect, the distance converter may calculate the measured distance value to the target by combining and computing at least two or more of the first and second sets of integrated waveform data in a specific section.

According to this aspect, the distance converter performs computing by combining appropriate integrated waveform data of the first and second sets of integrated waveform data in the specific section to calculate the measured distance value to the target, thus enabling more appropriate calculation of the measured distance value to the target. For example, the measured distance value to the target can be appropriately calculated even at the boundary before and after the specific section.

In the above aspect, the distance converter may calculate the measured distance value to the target by performing a weighted average process on the first and second sets of integrated waveform data in a specific section.

According to this aspect, the distance converter calculates the measured distance value to the target by performing the weighted average process on the first and second sets of integrated waveform data in the specific section, thus enabling more appropriate calculation of the measured distance value to the target. For example, it is possible to reduce a step that causes a rapid change in the measured distance value to the target at each of the boundaries before and after the specific section.

In the above aspect, the counter measurer may generate a first timing on the basis of a feature point of the binarization signal, and generate a second timing from the first timing on the basis of a clock signal.

According to this aspect, the counter measurer generates an appropriate timing on the basis of the feature point of the binarization signal and further generates another timing on the basis of the clock signal, thereby enabling appropriate generation of a plurality of timings.

In the above aspect, the second timing may be one clock later than the first timing.

According to this aspect, the counter measurer can generate an appropriate timing on the basis of the feature point of the binarization signal and further generate another timing one clock later., thereby enabling appropriate generation of a plurality of timings.

According to the present invention, it is possible to provide a sensor device capable of detecting a target more accurately using rough measurement and fine measurement.

BRIEF DESCRIPTION OF THE DRAWINGS

Fig. 1 is a block diagram illustrating a configuration of a sensor device 100 according to one embodiment of the present invention;

Fig. 2 is a schematic diagram illustrating the detection principle of the sensor device 100 illustrated in Fig. 1;

Fig. 3 is a block diagram illustrating a configuration of a TDC delay line measurer 33 illustrated in Fig. 1 and its periphery;

Fig. 4 is a block diagram illustrating a configuration of a counter measurer 32 illustrated in Fig. 1;

Fig. 5 is a timing chart illustrating the operations of the counter measurer 32 illustrated in Fig. 1 and its periphery;

Fig. 6 is a timing chart illustrating an operation of rough measurement of the counter measurer 32 illustrated in Fig. 1;

Fig. 7 is a timing chart illustrating the outline of the operations of the TDC delay line measurer 33 illustrated in Fig. 1 and its periphery;

Fig. 8 is a waveform diagram illustrating process results in the waveform integrator 34 illustrated in Fig. 1 and its periphery when a reflectance of a target TA is relatively low;

Fig. 9 is a waveform diagram illustrating process results in the waveform integrator 34 illustrated in Fig. 1 and its periphery when the reflectance of the target TA is relatively high;

Fig. 10 is a waveform diagram illustrating process results in the stage number calculator 37 illustrated in Fig. 1 and its periphery when the reflectance of the target TA is relatively high;

Fig. 11 is a partially enlarged view illustrating the vicinity of the intersection of an integration signal Dt and a high threshold HTh illustrated in Fig. 10;

Fig. 12 is a flowchart illustrating a schematic operation of the sensor device 100 according to one embodiment of the present invention;

Fig. 13 is a flowchart illustrating a distance conversion process to which a weighted average process illustrated in Fig. 12 is applied;

Fig. 14 is an example illustrating the relationship between a counter measurement value and TDC-measurement stage numbers Nm1, Nm2 as a counter measurement value graph and a TDC-measurement stage number graph;

Fig. 15 is a graph illustrating a measured distance value calculated by the distance conversion process to which the weighted average process described with reference to Fig. 13 has been applied; and

Fig. 16 is a flowchart illustrating a determination process illustrated in Fig. 12;

DETAILED DESCRIPTION

Hereinafter, a preferred embodiment of the present invention will be specifically described with reference to the accompanying drawings. Note that the embodiment described below is merely a specific example for carrying out the present invention, and does not limit the interpretation of the present invention. To facilitate understanding of the description, the same components in the drawings are denoted by the same reference numerals as much as possible, and a redundant description may be omitted.

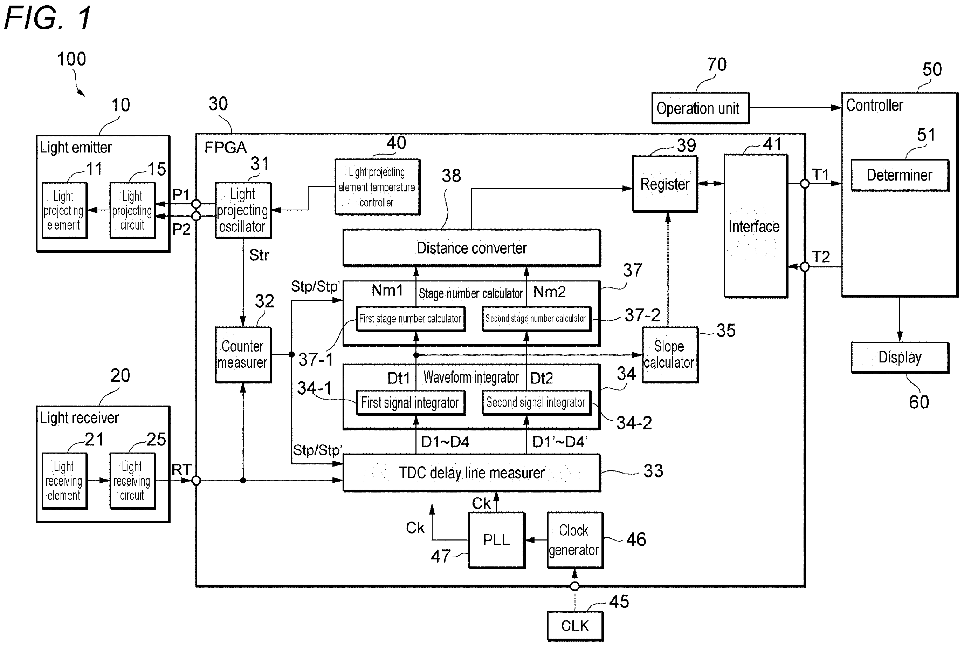

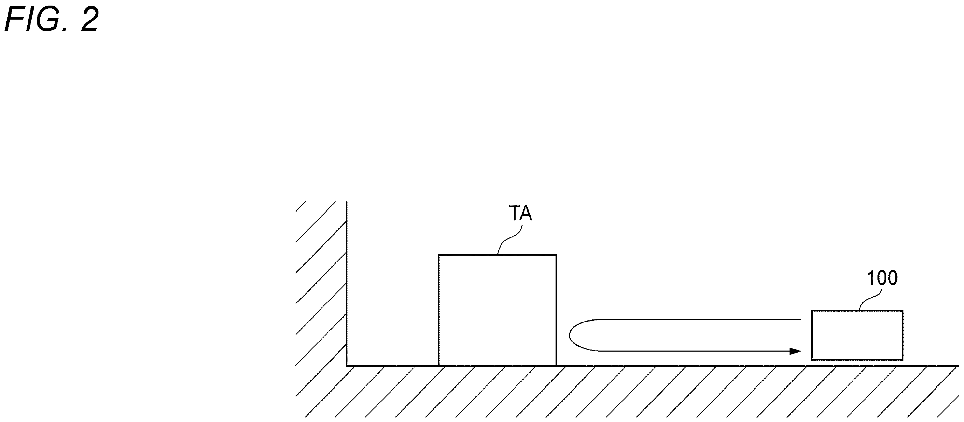

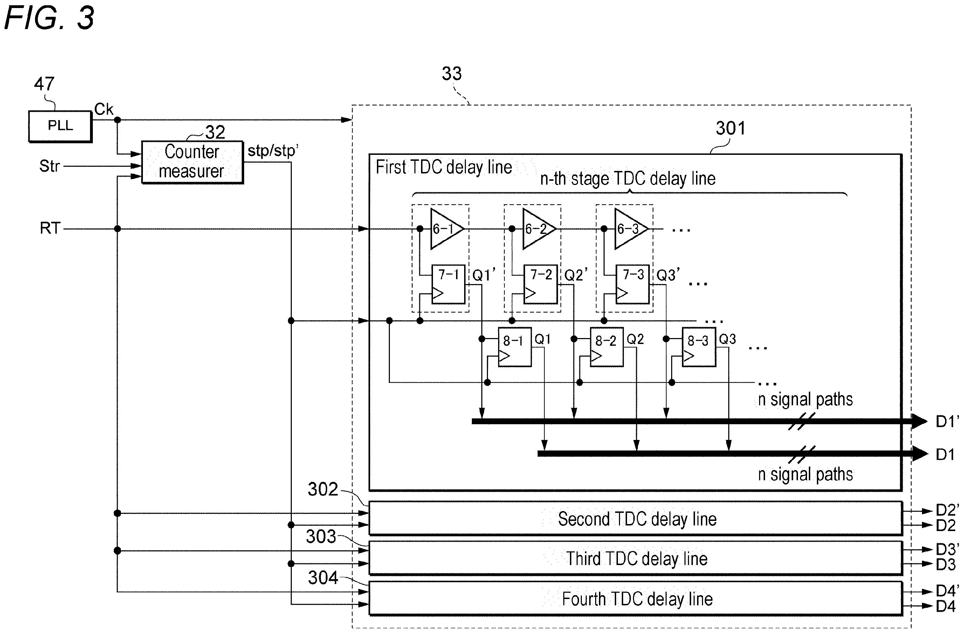

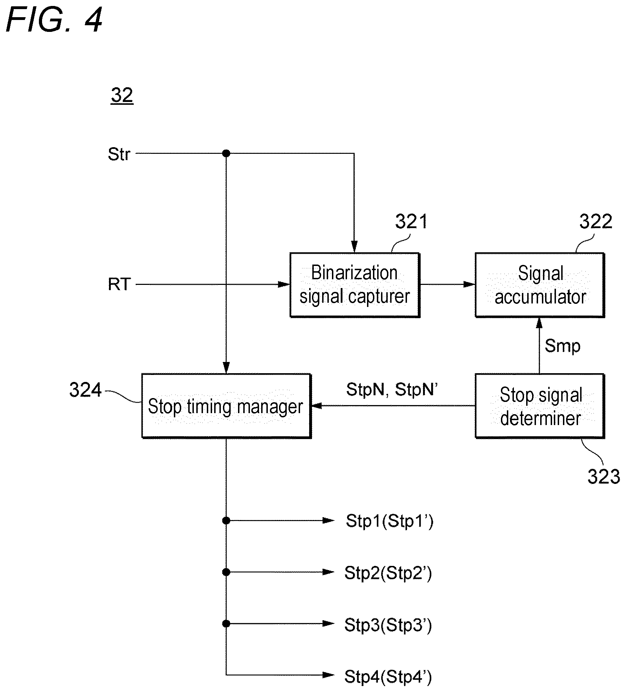

First, an example of a configuration of a sensor device according to the embodiment will be described with reference to Figs. 1 to 4. Fig. 1 is a block diagram illustrating a configuration of a sensor device 100 according to one embodiment of the present invention. Fig. 2 is a schematic diagram illustrating the detection principle of the sensor device 100 illustrated in Fig. 1. Fig. 3 is a block diagram illustrating a configuration of a TDC delay line measurer 33 illustrated in Fig. 1 and its periphery. Fig. 4 is a block diagram illustrating a configuration of a counter measurer 32 illustrated in Fig. 1.

As illustrated in Fig. 1, the sensor device 100 includes a light emitter 10, a light receiver 20, a field-programmable gate array (FPGA) 30, a clock (CLK) 45, a controller 50, a display 60, and an operation unit 70. The sensor device 100 is, for example, a photoelectric sensor, and is designed to detect a target.

As illustrated in Fig. 2, the sensor device 100 emits detection light toward a target TA. The detection light reflected by the target TA returns to the sensor device 100 and is received. In the sensor device 100, by performing a signal processing on the received detection light, it is possible to precisely measure the distance to the target TA on the basis of the time from light projection to light reception. As a result, it is possible to detect the target TA at a predetermined distance (position) from the sensor device 100. In addition to the example illustrated in Fig. 2, for example, a mode is also conceivable in which the target TA flowing on a factory line is detected from above. Further, what is output from the sensor device 100 toward the target TA may be an electromagnetic wave, a sound wave, or the like in addition to light.

Returning to the description of Fig. 1, the light emitter 10 is configured to emit detection light toward the target TA. The light emitter 10 includes a light projecting element 11 and a light projecting circuit 15. The light projecting element 11 repeatedly emits the detection light toward the target TA illustrated in Fig. 2. Hereinafter, an example in which the detection light is periodically emitted will be described, but the detection light may be randomly emitted. The light projecting element 11 includes, for example, a laser diode (LD), and the detection light is, for example, pulsed light. A pulse control signal P1 and a power control signal P2 of the light projecting element 11 are input from the FPGA 30 to the light projecting circuit 15, and the light projecting circuit 15 controls the detection light emitted from the light projecting element 11 on the basis of the pulse control signal P1 and the power control signal P2.

The light receiver 20 is configured to receive the reflected light of the detection light and generate a binarization signal RT. The light receiver 20 includes a light receiving element 21 and a light receiving circuit 25. The light receiving element 21 receives the detection light reflected from the target TA illustrated in Fig. 2 and outputs a light reception signal. The light receiving element 21 includes, for example, an avalanche photo diode (APD). The light receiving circuit 25 compares the amount of light received from the light reception signal input from the light receiving element 21 with a predetermined threshold to binarize the light reception signal and generate a binarization signal RT. The light receiving circuit 25 outputs the generated binarization signal RT.

The FPGA 30 includes a light projecting oscillator 31, a counter measurer 32, a time-to-digital converter (TDC) delay line measurer 33, a waveform integrator 34, a slope calculator 35, a stage number calculator 37, a distance converter 38, a register 39, a light projecting element temperature controller 40, an interface 41, a clock generator 46, and a PLL (Phase Locked Loop) 47. The FPGA 30 can be replaced by an integrated circuit such as an application-specific integrated circuit (ASIC).

The waveform integrator 34 includes a first signal integrator 34-1 and a second signal integrator 34-2, and the stage number calculator 37 includes a first stage number calculator 37-1 and a second stage number calculator 37-2.

Here, the stage number calculator 37 includes a first stage number calculator 37-1 and a second stage number calculator 37-2 in parallel in accordance with the configuration of the waveform integrator 34, but is not limited thereto. For example, one stage number calculator may be used by being switched in a time division manner to process signals from the first signal integrator 34-1 and the second signal integrator 34-2, respectively.

Further, the waveform integrator 34 has a configuration in which the signal from the TDC delay line measurer 33 is input to the first signal integrator 34-1 and the second signal integrator 34-2, but is not limited thereto. For example, the waveform integrator 34 may have a configuration in which three or more signal integrators are provided, and the signal from the TDC delay line measurer 33 is input to the three or more signal integrators.

The CLK 45 outputs, for example, an oscillation signal of 20 MHz to clock generator 46. An oscillation signal is input to the clock generator 46, and the clock generator 46 generates and outputs a reference clock on the basis of the oscillation signal. The reference clock is input to the PLL 47, and the PLL 47 generates and outputs a clock signal Ck phase-synchronized with a desired frequency on the basis of the reference clock. The clock signal Ck is supplied to each component of the FPGA 30.

An output signal from the light projecting element temperature controller 40 is input to the light projecting oscillator 31. The light projecting oscillator 31 generates the pulse control signal P1 and the power control signal P2 on the basis of the output signal, and outputs the pulse control signal P1 and the power control signal P2 to the light projecting circuit 15 described above. The light projecting element temperature controller 40 is designed to control the light projecting power of the detection light emitted from the light emitter 10 on the basis of the temperature information of the light projecting element 11. In addition, the light projecting oscillator 31 outputs a start signal Str for starting counting in the counter measurer 32 to the counter measurer 32 in synchronization with the pulse control signal P1.

The binarization signal RT and the start signal Str are input to the counter measurer 32. The counter measurer 32 generates a stop signal Stp (first timing) and a stop signal Stp' (second timing) at the timing one clock later corresponding to the feature point of the binarization signal RT, and outputs the generated stop signals Stp, Stp'. Details of the counter measurer 32 will be described later.

The binarization signal RT and the stop signals Stp, Stp' are input to the TDC delay line measurer 33. The TDC delay line measurer 33 generates delay line output signals D1 to D4, D1'to D4', and outputs the generated delay line output signals D1 to D4, D1'to D4' to the waveform integrator 34. The TDC delay line measurer 33 is different from a TDC that measures the time of a stop pulse arriving late from a start pulse, that is, a single-hit TDC using a delay line.

In the waveform integrator 34, the first signal integrator 34-1 and the second signal integrator 34-2 respectively integrate the delay line output signals D1 to D4, D1'to D4' input from the TDC delay line measurer 33 corresponding to a plurality of times of light emission in the light emitter 10, and generate integration signals Dt1, Dt2 (hereinafter, the integration signal may be collectively referred to as "Dt"), respectively. The waveform integrator 34 outputs the generated integration signal Dt to the slope calculator 35 and the stage number calculator 37. Specifically, in the waveform integrator 34, the first signal integrator 34-1 may process the delay line output signals D1 to D4 input from the TDC delay line measurer 33 to generate the integration signal Dt1, and the second signal integrator 34-2 may process the delay line output signals D1'to D4' input from the TDC delay line measurer 33 to generate the integration signal Dt2.

The slope calculator 35 calculates a slope for the integration signal Dt (Here, Dt1 from the first signal integrator 34-1) input from the waveform integrator 34. For example, the slope calculator 35 obtains a high value from the amplitude of the integration signal Dt1, that is, the intersection of a predetermined high threshold for slope with respect to the integration numbers and the integration signal Dt1. Similarly, the slope calculator 35 obtains a low value from the intersection of a predetermined low threshold for slope with respect to the integration number of the integration signal Dt1 and the integration signal Dt1. Then, a slope $\alpha$ calculated by the slope calculator 35 is expressed as (Equation 1) below using these values:

$$\text{Slope } \alpha = (\text{High threshold for slope} - \text{Low threshold for slope})/(\text{High value} - \text{Low value}) \dots (\text{Equation 1}).$$

The slope calculator 35 outputs the calculated slope to the register 39 via the interface 41.

The stage number calculator 37 calculates the stage number of a delay circuit included in the TDC delay line measurer 33 on the basis of the integration signal Dt input from the waveform integrator 34. Specifically, the first stage number calculator 37-1 calculates the stage number of the delay circuit included in the TDC delay line measurer 33 on the basis of the integration signal Dt1 input from the first signal integrator 34-1, and the second stage number calculator 37-2 calculates the stage number of the delay circuit included in the TDC delay line measurer 33 on the basis of the integration signal Dt2 input from the second signal integrator 34-2. The delay circuit of the TDC delay line measurer 33 will be described later. The stage number calculator 37 outputs the calculated stage numbers Nm1, Nm2 of the delay circuits to the distance converter 38.

The distance converter 38 performs conversion into the distance from the sensor device 100 on the basis of the stage numbers Nm1, Nm2 of the delay circuits input from the first stage number calculator 37-1 and the second stage number calculator 37-2, and outputs the converted distance. Note that the detailed process for the distance conversion will be described later.

The slope calculated by the slope calculator 35 and the distance converted by the distance converter 38 are input to and stored in the register 39.

The interface 41 outputs the slope calculated by the slope calculator 35 and the output result of the distance converter 38, which are stored in the register 39, to the controller 50 as a measurement signal T1.

The controller 50 is configured to control the display 60 and the operation unit 70. On the basis of the measurement signal T1 input from the interface 41, the controller 50 obtains the amount of light received from, for example, the slope of an integration signal Dt, and outputs the obtained amount of light received to the display 60. Further, the controller 50 generates setting data T2 corresponding to information input by a user operating the operation unit 70, and outputs the generated setting data T2 to the interface 41. The controller 50 includes, for example, a microprocessor such as a central processing unit (CPU), a memory such as a read-only memory (ROM) and a random-access memory (RAM), and a buffer storage device such as a buffer.

Further, the controller 50 includes a determiner 51 as a functional configuration thereof. On the basis of the output result of the distance converter 38 included in the measurement signal T1 input from the interface 41, the determiner 51 determines whether or not the target TA illustrated in Fig. 2 exists at a predetermined distance, that is, whether or not the target TA exists. The controller 50 outputs the determination result to the display 60.

The display 60 is designed to output information. The display 60 displays the distance input from the controller 50. In addition, the display 60 displays the presence or absence of the target TA on the basis of the determination result input from the controller 50. The display 60 includes, for example, an indicating lamp such as a lamp or a light-emitting diode (LED), and a display such as an organic electroluminescent (organic EL) diode (OLED) display.

The operation unit 70 is designed to input information. The operation unit 70 outputs a signal corresponding to the operation of the user to the controller 50. The operation unit 70 includes, for example, a plurality of buttons.

As illustrated in Fig. 3, the counter measurer 32 starts counting the binarization signal RT in response to the start signal Str. The binarization signal RT is counted on the basis of the clock signal Ck input from the PLL 47. In addition, the counter measurer 32 generates stop signals Stp1, Stp2, Stp3, Stp4 (hereinafter also referred to collectively as a "stop signal Stp (first timing)") corresponding to the feature points of the binarization signal RT, and stop signals Stp1', Stp2', Stp3', Stp4' (hereinafter also referred to collectively as a "stop signal Stp' (second timing)") at the timing one clock later. Then, the counter measurer 32 outputs the stop signals Stp1', Stp2', Stp3', Stp4' to the TDC delay line measurer 33.

The TDC delay line measurer 33 includes a first TDC delay line 301, a second TDC delay line 302, a third TDC delay line 303, and a fourth TDC delay line 304. Note that Fig. 3 illustrates the example in which the TDC delay line measurer 33 includes four TDC delay lines, but the present invention is not limited thereto. In the TDC delay line measurer 33, the number of TDC delay lines may be increased or decreased according to the scale of the logical capacity.

The first TDC delay line 301 receives and propagates the binarization signal RT. The first TDC delay line 301 includes a first memory that records the propagated binarization signal RT on the basis of the stop signal Stp (first timing), and a second memory that records the binarization signal RT on the basis of the stop signal Stp' (second timing).

As a specific example, the first TDC delay line 301 includes delay elements 6-1, 6-2, 6-3, ..., 6-n (n is a positive integer) (hereinafter also referred to collectively as a "delay element 6"), flip-flop circuits 7-1, 7-2, 7-3, ..., 7-n (hereinafter also referred to collectively as a "flip-flop circuit 7 (second memory)"), and flip-flop circuits 8-1, 8-2, ..., 8-n (hereinafter also referred to collectively as a "flip-flop circuit 8 (first memory)"). The delay element 6 includes, for example, an inverter, that is, a NOT gate. The flip-flop circuits 7, 8 each include, for example, a D flip-flop, and the D flip-flop can be replaced with a latch circuit or the like. The delay element 6 generates a delay by using the carry for high-speed computing of a logic element (LE). As a result, in the FPGA 30, the delay element 6 with a resolution on the order of picoseconds is realized. The delay element 6 in the FPGA 30 can also be realized using a delay between the clock input and the Q input of the D flip-flop. In this case, a stable delay time on the order of nanoseconds can be obtained.

The binarization signal RT input to the first TDC delay line 301 is input to the delay element 6-1 and the flip-flop circuit 7-1, and the flip-flop circuit 7-1 outputs the binarization signal RT at the timing when the stop signal Stp1' is input (Q1'). The delay element 6-1 delays the input binarization signal RT for a certain time, and then outputs the delayed binarization signal RT to the delay element 6-2 and the flip-flop circuit 7-2. The flip-flop circuit 7-2 outputs the input from the delay element 6-1 at the timing when the stop signal Stp1' is input (Q2'). The delay element 6-2 delays the input from the delay element 6-1 for a certain time, and then inputs the delayed input to the delay element 6-3 and the flip-flop circuit 7-3. The flip-flop circuit 7-3 outputs the input from the delay element 6-2 at the timing when the stop signal Stp1' is input (Q3'). The same applies to the delay element 6-3 and thereafter and the flip-flop circuit 7-4 and thereafter, and hence the description thereof will be omitted.

The first TDC delay line 301 combines delay signals Q1', Q2', Q3', ..., Qn' (hereinafter also referred to collectively as a "delay signal Q'") synchronously output from the flip-flop circuits 7-1, 7-2, 7-3, ..., and outputs a delay line output signal D1j' (j is an integer from 1 to m, and m is a positive integer). The delay line output signal D1j' is waveform data of the binarization signal RT having a time length corresponding to the sum of the delay times of the delay elements 6-1, 6-2, 6-3, ..., 6-n. The signal is then output as the delay line output signal D1' and input to the second signal integrator 34-2 of the waveform integrator 34.

The binarization signal RT input to the first TDC delay line 301 is latched by the flip-flop circuit 7-1 at the timing when the stop signal Stp1 is input, and then shifted to the flip-flop circuit 8-1 at the timing when the stop signal Stp1' is input. Then, the signal is extracted from the flip-flop circuit 8-1 as a signal corresponding to the timing of the stop signal Stp1 (Q1). Similarly, the binarization signal RT input to the first TDC delay line 301 and delayed by the delay element 6-1 for a certain time is latched by the flip-flop circuit 7-2 at the timing when the stop signal Stp1 is input, and then shifted to the flip-flop circuit 8-2 at the timing when the stop signal Stp1' is input. Then, the signal is extracted from the flip-flop circuit 8-2 as a signal corresponding to the timing of the stop signal Stp1 (Q2). The same applies to the flip-flop circuit 8-3 (Q3) and thereafter, and hence the description thereof will be omitted.

The first TDC delay line 301 combines the delay signals Q1, Q2, Q3, ..., and Qn (hereinafter also referred to collectively as a "delay signal Q") synchronously output from the flip-flop circuits 8-1, 8-2, 8-3, ..., and outputs a delay line output signal D1j (j is an integer from 1 to m, and m is a positive integer). The delay line output signal D1j is waveform data of the binarization signal RT having a time length corresponding to the sum of the delay times of the delay elements 6-1, 6-2, 6-3, ..., 6-n. The signal is then output as the delay line output signal D1 and input to the first signal integrator 34-1 of the waveform integrator 34.

That is, the binarization signal RT is input to the first TDC delay line 301, the flip-flop circuit 8 outputs the signal as a signal corresponding to the timing of the stop signal stp from the counter measurer 32 after the timing of the stop signal stp', and the flip-flop circuit 7 outputs the signal as a signal corresponding to the timing of the stop signal stp' at the timing of the stop signal stp' from the counter measurer 32. Then, the signals are output as the delay line output signal D1 and the delay line output signal D1', respectively, and are input to the first signal integrator 34-1 and the second signal integrator 34-2 of the waveform integrator 34.

Note that the configuration of the first TDC delay line 301 is not limited to the configuration (delay element 6 and flip-flop circuits 7, 8) illustrated in Fig. 3, and other configurations may be used as long as the signals are output as the delay line output signal D1 and the delay line output signal D1', respectively.

The same applies to the delay line output signals D2 to D4 and D2' to D4' of the TDC delay line 302 to 304, and hence the description thereof will be omitted. In addition, the circuit configuration of the TDC delay line 302 to 304 is similar to that of the TDC delay line 301, and hence the illustration and description thereof will be omitted. Each of the TDC delay lines 301 to 304 is driven by the clock signal Ck input from the PLL 47.

The delay width of the delay element 6 included in each of the TDC delay lines 301 to 304 changes depending on the ambient temperature. Therefore, when the distance from the sensor device 100 to the target TA is calculated on the basis of the delay width, the calculated distance varies according to the temperature. To correct such variation in the number of delay stages due to the temperature, the TDC delay line measurer 33 may further include a TDC delay line for temperature correction. In this case, the TDC delay line for temperature correction outputs a signal indicating the number of delay stages according to the temperature to, for example, the distance converter 38 described above, and the distance converter 38 performs temperature correction on the number of delay circuits input from the stage number calculator 37 using the signal. Then, the distance converter 38 converts the stage number of the delay circuit subjected to the temperature correction into a distance. As a result, it is possible to correct fluctuation (variation) in the measurement result due to the ambient temperature.

As illustrated in Fig. 4, the counter measurer 32 includes a binarization signal capturer 321, a signal accumulator 322, a stop signal determiner 323, and a stop timing manager 324. The binarization signal capturer 321 captures the binarization signal RT on the basis of the timing of the start signal Str. The signal accumulator 322 accumulates the captured binarization signal RT. The signal accumulator 322 integrates the measurement results for n measurement cycles in rough measurement based on a clock to be described later. The stop signal determiner 323 outputs a sampling signal Smp based on the clock signal to the signal accumulator 322 that accumulates the binarization signal RT.

The stop signal determiner 323 identifies the rising time point of the integrated value of the binarization signal RT that first intersects with a determination threshold as a measurement point, and outputs a stop signal StpN at this time point. Note that the measurement point is not limited to the rising time point, but may be a falling time point or another feature point. Then, after outputting the stop signal StpN, the stop signal determiner 323 further outputs a stop signal StpN' at the timing one clock later. Upon receiving the stop signals StpN, StpN', the stop timing manager 324 simultaneously outputs the stop signals Stp1, Stp2, Stp3, Stp4 to the TDC delay lines 301 to 304 every predetermined number of clock cycles, for example, every 128 clock cycles, on the basis of the timing of the start signal Str, and further simultaneously outputs the stop signals Stp1', Stp2', Stp3', Stp4', respectively. The stop timing manager 324 includes a register for correcting a time difference due to a difference in wiring lengths for outputting the stop signals Stp1, Stp2, Stp3, Stp4 and the stop signals Stp1', Stp2', Stp3', Stp4'. The use of the register can suppress fluctuation (variation) in the measured time value due to the wiring length.

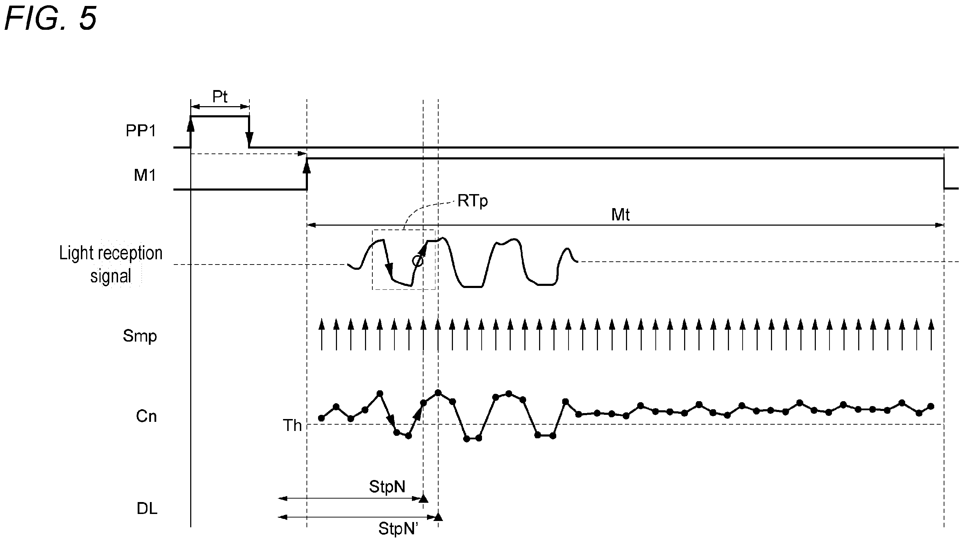

Next, an example of the operations of the counter measurer according to the embodiment and its periphery will be described with reference to Fig. 5. Fig. 5 is a timing chart illustrating the operations of the counter measurer 32 illustrated in Fig. 1 and its periphery.

First, the sensor device 100 performs rough measurement on the time elapsed from the start of light emission over the entire measurement range of the sensor device 100 by a counter method using a clock signal. The rough measurement is performed with a resolution on the order of nanoseconds. Thereafter, fine measurement is performed around the measurement point estimated by the rough measurement by the TDC delay line method. Specifically, by outputting the stop signal of the fine measurement around the measurement point searched by the rough measurement, the time around the target TA can be measured with high accuracy. The fine measurement is performed with a resolution on the order of picoseconds.

<Rough Measurement>

As illustrated in Fig. 5, first, the light projecting element 11 emits a light projection pulse PP1 with a pulse width Pt. A certain period Mt after the emission of the light projection pulse PP1 is a measurement section M1 of the light projection pulse PP1. During the measurement section M1, the counter measurer 32 samples the binarization information of the binarization signal RT based on the light reception signal using the sampling signal Smp based on the clock signal. Since the binarization information is sampled on the basis of the clock signal, the binarization information is associated with the time information. The binarization signal RT based on the light reception signal is, for example, a signal from the light receiving element 21 input by a low-voltage differential signaling (LVDS) method. A partial waveform RTp of the light reception signal indicates a reflected wave corresponding to the light projection pulse PP1.

A counter integration signal Cn is obtained by measuring the binarization information of the binarization signal RT using the sampling signal Smp until a predetermined number of times of integration (n times) is reached, and then integrating n times of binarization information for each clock. The counter measurer 32 identifies the rising time point of the counter integration signal Cn that first intersects with a determination threshold Th as a measurement point, outputs the stop signal StpN at this time point, and further outputs the stop signal StpN' at the timing one clock later. However, this identification of the measurement point is an example, and another feature point, such as a falling time point instead of the rising time point, may be identified as the measurement point. In the rough measurement, a new waveform is searched from an old waveform in time series to find the feature point of the light reception signal (binarization signal RT). In the r measurement, it is also possible that an old waveform is searched from a new waveform in time series to find the feature point of the light reception signal (binarization signal RT).

<Fine Measurement>

The TDC delay line measurer 33 performs the fine measurement of the time immediately before the stop signal on the basis of the stop signal obtained by the rough measurement. In the delay line measurement, upon receiving the stop signals Stp1 (Stp1'), Stp2 (Stp2'), Stp3 (Stp3'), Stp4 (Stp4'), the TDC delay line 301, 302, 303, 304 performs the fine measurement around the measurement point. By applying the stop timing of the fine measurement around the measurement point searched by the rough measurement, the time to the periphery of the target TA can be measured with high accuracy. It is thereby possible to improve the measurement accuracy of the distance to the periphery of the target TA without increasing the circuit scale, and to expand the range of the detectable distance.

In the fine measurement, the integration result of the binarization signal RT acquired in the delay line is filtered, and then an old waveform is searched from a temporally new waveform. This enables the measurement point to be searched at the highest signal level possible, and the influence of noise, such as external light, to be minimized. In the fine measurement, it is also possible to search a new waveform from an old waveform in time series.

In addition, by acquiring the binarization signal RT using a plurality of delay lines connected in parallel, the number of times of sampling in the same time can be increased as compared to a case where the delay line is a single line. Therefore, the sensor device 100 can support high-speed output.

In addition, by performing the following processes together, it is possible to increase the speed of the sensor response of the sensor device 100 and stabilize the measurement.

For example, in a case where a target flowing on a factory line is measured or other cases, the target may disappear and an insufficient light error may occur, and then the target may be present again. In this case, it is possible to increase the output response speed of the sensor device 100 by using the result of the previous rough measurement to perform the fine measurement.

When an insufficient amount of light occurs in the rough measurement, the fine measurement can be executed on the basis of the result of the previous rough measurement. It is also possible that a measurement error is not determined when an insufficient amount of light occurs in the rough measurement, and that a measurement error is determined only when an insufficient amount of light occurs in the fine measurement.

The amplitude of the integrated waveform for determining an insufficient amount of light in the rough measurement or the fine measurement can be determined on the basis of the amplitude of the integrated waveform set by the user's operation.

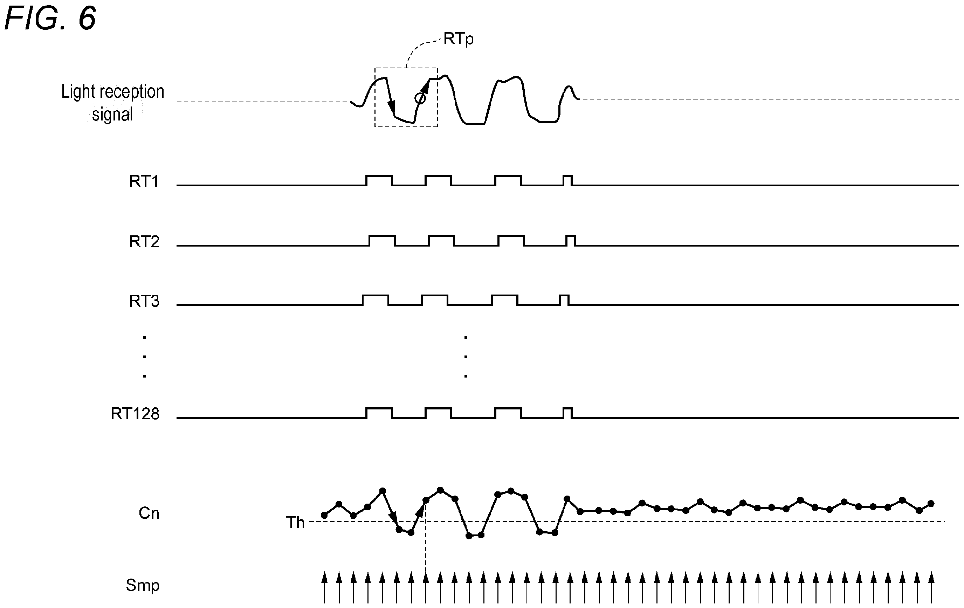

Next, an example of the operation of the rough measurement of the counter measurer according to the embodiment will be described with reference to Fig. 6. Fig. 6 is a timing chart illustrating the operation of the rough measurement of the counter measurer 32 illustrated in Fig. 1.

As illustrated in Fig. 6, the binarization signal capturer 321 captures the binarization signal RT based on the light reception signal on the basis of the timing of the start signal Str. The binarization signal RT corresponds to the waveform shown in Fig. 5. The binarization signal RT has been binarized, and the signal accumulator 322 accumulates the binarization signals RT1, RT2, ..., and RT 128 (hereinafter also referred to collectively as a "binarization signal RT") sequentially captured by the binarization signal capturer 321 in accordance with the timing of the start signal Str. The counter integration signal Cn indicates the binarization signal RT accumulated in the signal accumulator 322 and corresponds to the waveform illustrated in Fig. 5.

The stop signal determiner 323 outputs the sampling signal Smp based on the clock signal to the signal accumulator 322 that accumulates the counter integration signal Cn. The stop signal determiner 323 identifies the rising time point of the counter integration signal Cn that first intersects with the determination threshold Th as a measurement point, outputs the stop signal Stp at this time point, and further outputs the stop signal Stp at the timing one clock later. The determination threshold Th is variably set according to n measurement cycles for the binarization signal RT, 128 cycles in the example illustrated in Fig. 6. The determination threshold Th is preferably set at a half of the n measurement cycles for the binarization signal RT, but may not be set at the half. When the target TA is placed at a distance far from the sensor device 100 or when the reflectance of the target TA is low, the determination threshold Th is set to be smaller than the half of the n measurement cycles for the binarization signal RT. This enables more sensitive detection of the feature point of the binarization signal RT shown in the counter integration signal Cn.

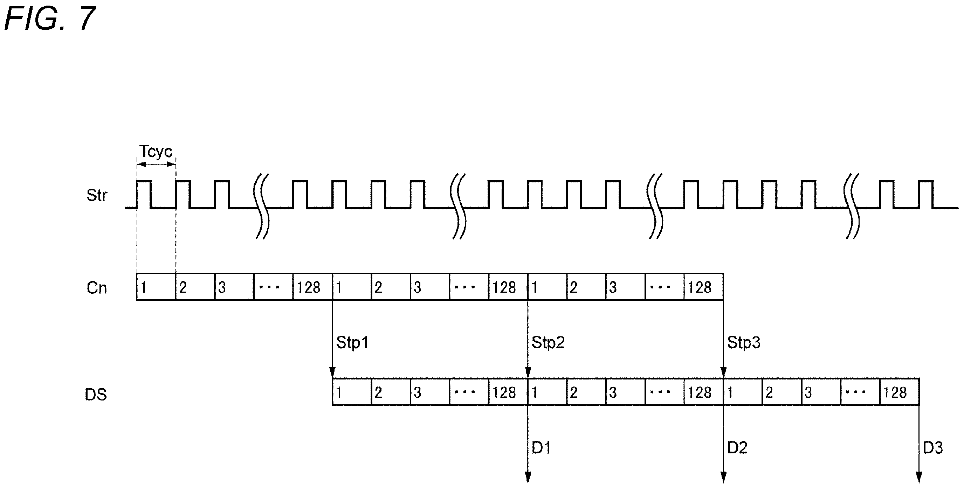

Next, an example of the operations of the TDC delay line measurer and its periphery according to the embodiment will be described with reference to Fig. 7. Fig. 7 is a timing chart illustrating the outline of the operations of the TDC delay line measurer 33 illustrated in Fig. 1 and its periphery. Note that Fig. 7 illustrates an operation when the number of counter measurements in the counter measurer 32 and the number of times of integration in the TDC delay line measurer 33 are the same (128 in Fig. 7, but can be changed). In either the counter measurer 32 or the TDC delay line measurer 33, the number of times can be reduced to shorten the response time. When the number of counter measurements and the number of times of integration are not the same, the measurement efficiency may decrease due to the waiting time for the counter measurement or the delay line measurement.

As illustrated in Fig. 7, the start signal Str corresponding to the clock signal Ck supplied from the PLL 47 to each component of the FPGA 30 has, for example, a cycle Tcyc. In the counter integration signal Cn of the counter measurer 32, the binarization signal RT is captured 128 times and integrated on the basis of the timing of the start signal Str. The stop signal determiner 323 identifies, as a measurement point, the rising time point of the integrated value of the binarization signal RT that first intersects with the determination threshold Th every 128 times, and simultaneously outputs the stop signals Stp1, Stp2, Stp3, Stp4 to the TDC delay line 301, 302, 303, 304 at this time point.

In a delay signal group DS in the TDC delay line measurer 33, the delay line output signal D1 is output in synchronization with the stop signal Stp1 in the first TDC delay line 301. Similarly, in the second TDC delay line 302 to 304, the delay line output signals D2 to D4 are output in synchronization with the stop signals Stp2 to Stp4, respectively. Then, the first signal integrator 34-1 of the waveform integrator 34 integrates and processes the delay line output signals D1 to D4 128 times, thereby generating the integration signal Dt1.

As described above, by performing the TDC delay line measurement on the basis of the stop timing determined by the number of clock cycles, the time from the start of light projection to the light reception measurement point can be obtained. As described with reference to Fig. 1, the delay line output signals D1, D2, D3, D4 are integrated by the first signal integrator 34-1, and the distance to the periphery of the target TA is measured via the first stage number calculator 37-1 and the distance converter 38 of the stage number calculator 37.

The stop signal determiner 323 simultaneously outputs the stop signals Stp1, Stp2, Stp3, Stp4 to the TDC delay line 301, 302, 303, 304, and then simultaneously outputs the stop signals Stp1', Stp2', Stp3', Stp4' to the TDC delay line 301, 302, 303, 304 at the timing one clock later. Then, as described above, the delay line output signals D1' to D4' are output by the TDC delay line measurer 33 and integrated by the second signal integrator 34-2, and the distance to the periphery of the target TA is measured via the second stage number calculator 37-2 and the distance converter 38 of the stage number calculator 37.

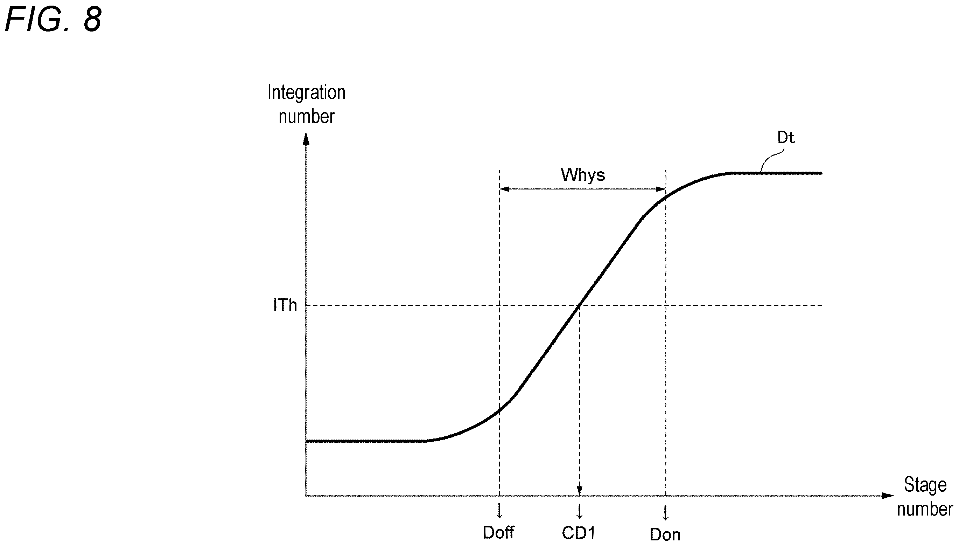

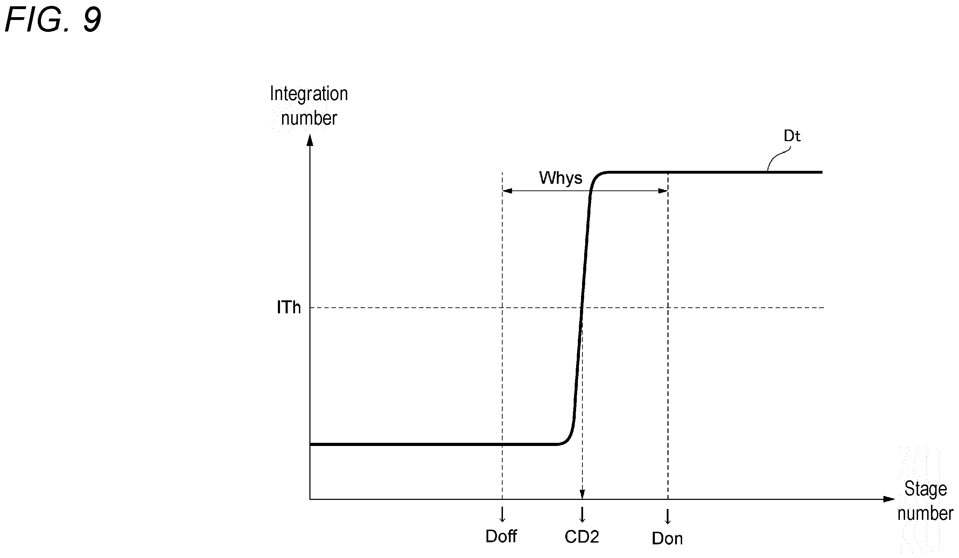

Next, an example of the operations of the waveform integrator and its periphery according to the embodiment will be described with reference to Figs. 8 and 9. Fig. 8 is a waveform diagram illustrating process results in the waveform integrator 34 illustrated in Fig. 1 and its periphery when the reflectance of the target TA is relatively low. Fig. 9 is a waveform diagram illustrating process results in the waveform integrator 34 illustrated in Fig. 1 and its periphery when the reflectance of the target TA is relatively high.

The integration signal Dt (Dt1, Dt2) output by the waveform integrator 34 is an integration signal of all the delay line output signals D1 to D4. The integration signal Dt may be subjected to filtering, that is, smoothing by moving averaging.

Here, the operation of a virtual sensor device will be described with reference to Figs. 8 and 9. The configuration of the virtual sensor device is similar to that of the sensor device 100, and hence the illustration and description thereof will be omitted. In the virtual sensor device, the stage number calculator calculates the stage number of the delay element from the intersection of the integration signal Dt with an integration threshold ITh. The distance converter converts the stage number of the delay element into a distance to the target. The determiner compares converted distances CD1, CD2 with an off-point distance Doff and an on-point distance Don to determine the presence or absence of the target. For example, when the converted distances CD1, CD2 are larger than the on-point distance Don in a state where the target has not been detected, it is determined that the target is present (detected). For example, when the converted distances CD1, CD2 are smaller than the off-point distance Doff in a state where the target TA has been detected, it is determined that there is no target (not detection). The width (difference) between the off-point distance Doff and the on-point distance Don is preset as a hysteresis width Whys.

As illustrated in Fig. 8, when the reflectance of the target TA is low, the slope of the integration signal Dt tends to be gentle, and fluctuation (variation) in the converted distance CD1 tends to be large. Therefore, the hysteresis width Whys between the off-point distance Doff and the on-point distance Don needs to be set wide. On the other hand, as illustrated in Fig. 9, when the reflectance of the target TA is high, the slope of the integration signal Dt tends to be steep, and fluctuation (variation) in the converted distance CD2 tends to be small. Therefore, the hysteresis width Whys between the off-point distance Doff and the on-point distance Don is desirably set narrow. However, setting the hysteresis width Whys according to the reflectance of the target TA is complicated, and is particularly difficult on a factory line where targets with different reflectance are mixed. When the hysteresis width Whys is set according to the target TA with the low reflectance, as illustrated in Fig. 9, the hysteresis width Whys is wide, and hence the converted distance CD2 hardly exceeds the off-point distance Doff or the on-point distance Don. Therefore, the detection accuracy of the target TA depends on the reflectance of the target TA.

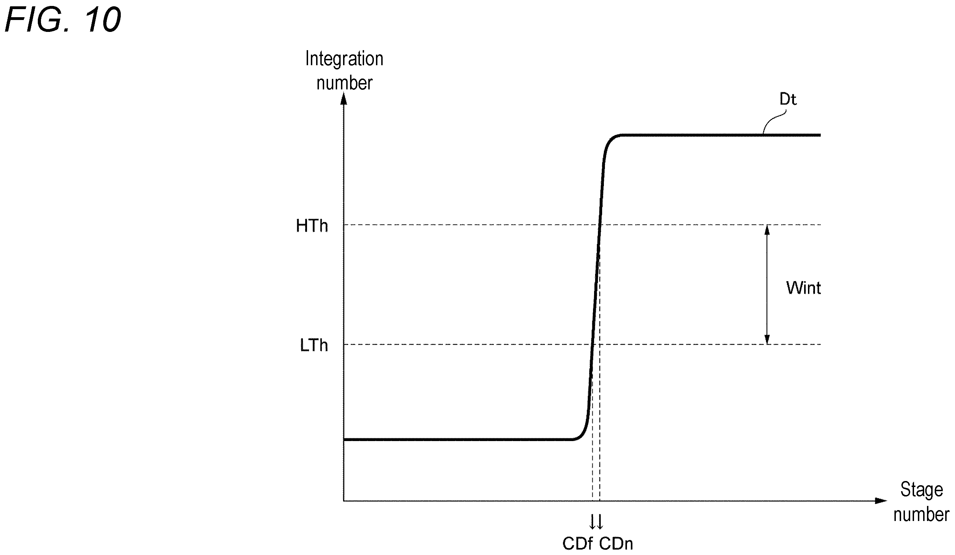

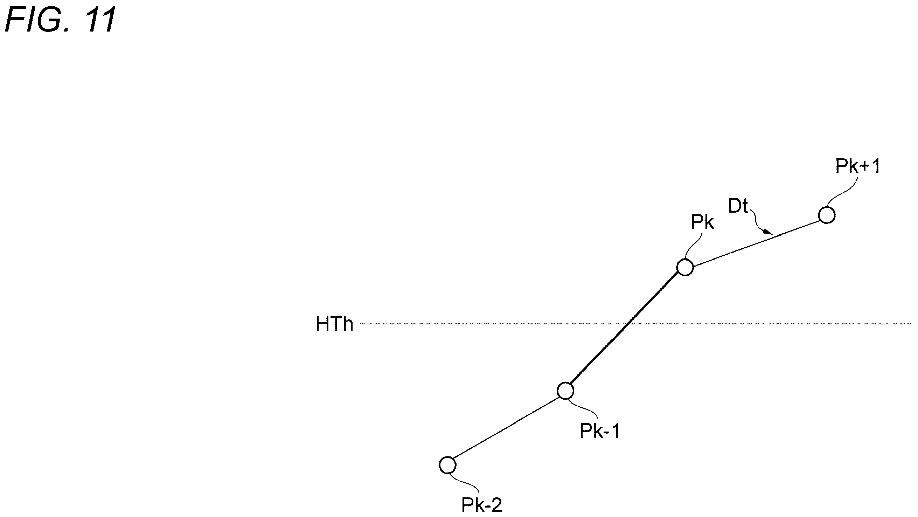

Next, with reference to Figs. 10 and 11, an example of the operations of the stage number calculator and its periphery according to the embodiment will be described. Fig. 10 is a waveform diagram illustrating process results in the stage number calculator 37 illustrated in Fig. 1 and its periphery when the reflectance of the target TA is relatively high. Fig. 11 is a partially enlarged view illustrating the vicinity of the intersection of the integration signal Dt with a high threshold HTh illustrated in Fig. 10.

As illustrated in Fig. 10, in the sensor device 100, the high threshold HTh and a low threshold LTh are set with respect to the amplitude of the integration signal Dt, that is, the integration number. The width (difference) between the high threshold HTh and the low threshold LTh is set to a predetermined value as the integration number width Wint. The stage number calculator 37 calculates the stage number of the delay element from the respective intersections of the integration signal Dt with the high threshold HTh and the low threshold LTh. The distance converter 38 converts the stage number of each delay element into a near-side distance value CDn and a far-side distance value CDf. Then, the determiner 51 determines the presence or absence of the target TA on the basis of the distance value calculated from the converted near-side distance value CDn and far-side distance value CDf and a predetermined distance threshold. Here, as illustrated in Fig. 10, when the target TA has high reflectance, the slope of the integration signal Dt is steep. Therefore, even when the difference (integration number width Wint) between the high threshold HTh and the low threshold LTh is constant, the width between the near-side distance value CDn and the far-side distance value CDf is relatively narrow. On the other hand, when the target TA has low reflectance, the slope of the integration signal Dt is gentle. Therefore, even when the difference (integration number width Wint) between the high threshold HTh and the low threshold LTh is constant, the width between the near-side distance value CDn and the far-side distance value CDf is relatively wide.

In this manner, the high threshold HTh and the low threshold LTh are set with respect to the integration number of the integration signal Dt, the stage number of the delay element is calculated from the intersections of the integration signal Dt with the high threshold HTh and the low threshold LTh, and the stage number of each delay element is converted into the near-side distance value CDn and the far-side distance value CDf. As a result, the width between the near-side distance value CDn and the far-side distance value CDf can be changed according to the reflectance. Therefore, by determining the presence or absence of the target TA on the basis of the distance value calculated from the converted near-side distance value CDn and far-side distance value CDf and the predetermined distance threshold, the target TA can be accurately detected regardless of the reflectance of the target TA.

In the embodiment, the example has been described in which the high threshold HTh and the low threshold LTh are set with respect to the integration number of the integration signal Dt, the stage number of the delay element is calculated from the intersections of the integration signal Dt with the high threshold HTh and the low threshold LTh, and the stage number of each delay element are converted into the near-side distance value CDn and the far-side distance value CDf. However, the present invention is not limited thereto. For example, instead of the integration signal Dt, the counter integration signal Cn may be used to set the high threshold and the low threshold for the integration numbers of the counter integration signal Cn. In this case, sampling numbers of the sampling signal Smp are calculated from the intersection of the counter integration signal Cn with the high threshold and the low threshold, and the respective sampling numbers of the sampling signal Smp are converted into the near-side distance value and the far-side distance value.

The intersections of the integration signal Dt with the high threshold HTh and the low threshold LTh are preferably obtained by a subpixel process. That is, as illustrated in Fig. 11, the integration signal Dt is a collection of discrete points (data) Pk-2, Pk-1, Pk, and Pk+1 from a micro viewpoint. The stage number calculator 37 performs the subpixel process on the integration signal Dt using the data immediately before the intersection with the high threshold HTh, which is the point Pk-1 in the example of Fig. 11, and the data immediately after the intersection with the high threshold HTh, which is the point Pk in the example of Fig. 11, to obtain the intersection of the integration signal Dt with the high threshold HTh. Then, the stage number calculator 37 calculates the stage number of the delay element from the obtained intersection. Similarly, the stage number calculator 37 also obtains the intersection of the integration signal Dt with the low threshold LTh by the subpixel process, and calculates the stage number of the delay element from the obtained intersection. This makes it possible to calculate the distance with a resolution of one or more stages of the delay element. Hence it is possible to improve the measurement accuracy of the distance to the periphery of the target TA.

<Detection Method>

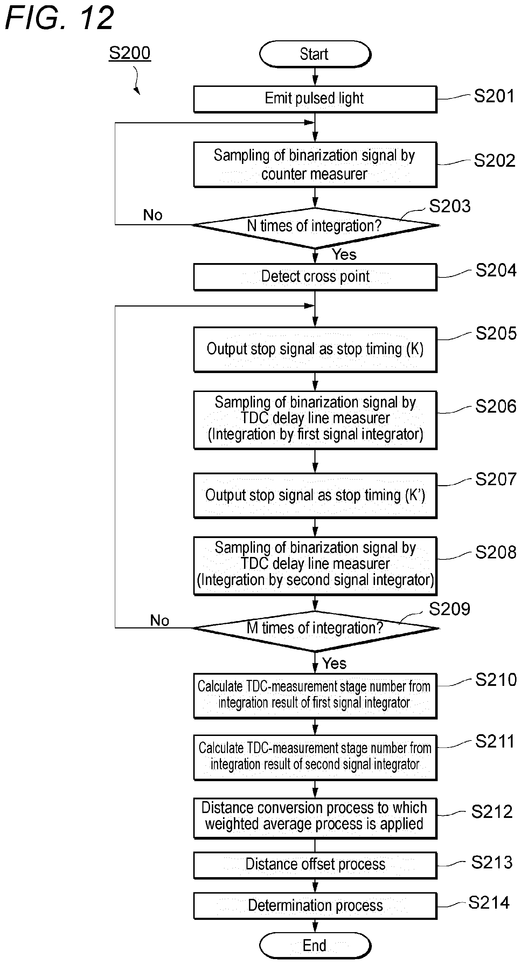

Next, an example of the operation of the sensor device according to the embodiment will be described with reference to Fig. 12. Fig. 12 is a flowchart illustrating a schematic operation of the sensor device 100 according to one embodiment of the present invention. These processes are mainly executed by a computer included in the sensor device 100, and are executed by, for example, a processor, an FPGA, an ASIC, or the like.

For example, when the sensor device 100 is turned on and activated, the sensor device 100 executes a detection process S200 illustrated in Fig. 12. Hereinafter, a case will be described in which the counter measurement by the counter measurer 32 and the number of times of integration by the waveform integrator 34 (first signal integrator 34-1 and second signal integrator 34-2) are the same.

First, the light projecting element 11 emits pulsed light toward the target TA (S201). Next, the counter measurer 32 samples the binarization information of the binarization signal RT (S202). Subsequently, the counter measurer 32 determines whether or not the sampling of N times of Integration has been completed (S203). As a result of the determination in step S203, when the sampling of N times of Integration has not been completed, the process returns to step S202, and the counter measurer 32 repeats the sampling of the binarization signal RT until the sampling of N times of Integration has been completed.

As a result of the determination in step S203, when integration has been performed N times, the counter measurer 32 detects a cross point at which the counter integration signal Cn intersects with the determination threshold Th (S204). Next, the counter measurer 32 identifies the measurement point on the basis of the cross point, and outputs the stop signal Stp at this time point (K) (S205). Subsequently, the delay line output signal is output on the basis of the stop signal Stp in the TDC delay line measurer 33 and integrated by the first signal integrator 34-1, and the binarization information of the binarization signal RT is sampled (S206).

The counter measurer 32 outputs the stop signal Stp at the time point (K) in step S205, and then outputs the stop signal Stp' at a time point (K'), which is the timing one clock later (S207). Similarly, the delay line output signal is output on the basis of the stop signal Stp' in the TDC delay line measurer 33 and integrated by the second signal integrator 34-2, and the binarization information of the binarization signal RT is sampled (S208).

Next, the waveform integrator 34 (first signal integrator 34-1 and second signal integrator 34-2) determines whether or not the sampling of M times of Integration has been completed (S209). As a result of the determination in step S209, when the sampling of M times of Integration has not been completed, the process returns to step S205, and the waveform integrator 34 (first signal integrator 34-1 and second signal integrator 34-2) repeats the sampling of the binarization signal RT until the sampling of M times of Integration has been completed.

Next, the first stage number calculator 37-1 calculates the stage number of each delay element from the respective intersections of the integration signal Dt1, generated by the first signal integrator 34-1 in step S206, with the high threshold HTh and the low threshold LTh (S210). Similarly, the second stage number calculator 37-2 calculates the stage number of each delay element from the respective intersections of the integration signal Dt2, generated by the second signal integrator 34-2 in step S208, with the high threshold HTh and the low threshold LTh (S211).

In this manner, the counter measurement value and the TDC-measurement stage number (the stage number of the delay element) are calculated. The distance converter 38 performs conversion into the near-side distance value CDn and the far-side distance value CDf on the basis of a counter measurement value k1, a one-clock-later counter measurement value k2, the TDC-measurement stage number Nm1 calculated by the first stage number calculator 37-1, and the TDC-measurement stage number Nm2 calculated by the second stage number calculator 37-2, and measures the distance to the target TA.

Here, according to the predetermined section, the distance converter 38 may calculate a measured distance value to the target TA using either the TDC-measurement stage number Nm1 calculated by the first stage number calculator 37-1 or the TDC-measurement stage number Nm2 calculated by the second stage number calculator 37-2. Moreover, in the specific section, the distance converter 38 may calculate the measured distance value to the target TA by computing with the TDC-measurement stage numbers Nm1, Nm2.

Specifically, it is preferable to represent a distance d1, calculated by the first stage number calculator 37-1 on the basis of TDC-measurement stage number Nm1 as $d1 = f(k1, Nm1)$. Further, it is preferable to represent a distance d2, calculated by the second stage number calculator 37-2 on the basis of the TDC-measurement stage number Nm2, as $d2 = f(k2, Nm2)$. Here, for example, the distances d1, d2 need only be calculated as the distance (distance conversion constant A) per counter measurement value count and the distance (distance conversion constant B) per TDC-measurement stage number by using the following equations:

$$d1 = k1 \times A + Nm1 \times B ... \text{(Equation 2)}$$

$$d2 = (k2 - 1) \times A + Nm2 \times B ... \text{(Equation 3)}.$$

The distance converter 38 performs conversion into a distance value using either (Equation 2) or (Equation 3) above, and further performs distance conversion by applying a weighted average process to the distance d1 calculated using (Equation 2) above and the distance d2 calculated using (Equation 3) above.

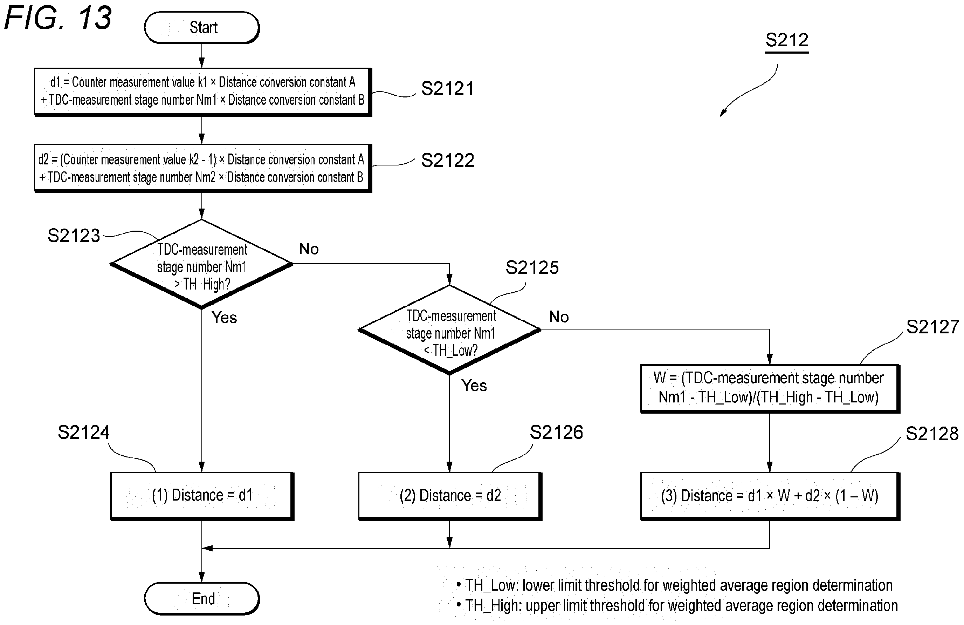

Here, an example of a distance conversion process to which the weighted average process is applied will be described with reference to Fig. 13. Fig. 13 is a flowchart illustrating the distance conversion process to which the weighted average process illustrated in Fig. 12 is applied. The sensor device 100 executes a distance conversion process S212, to which the weighted average process is applied, using the distance converter 38.

First, the distance d1, calculated on the basis of the TDC-measurement stage number Nm1 calculated by the first stage number calculator 37-1, is calculated using (Equation 2) above (S2121). The distance d2, calculated on the basis of the TDC-measurement stage number Nm2 calculated by the second stage number calculator 37-2, is calculated using (Equation 3) above (S2122).

Next, it is determined whether the TDC-measurement stage number Nm1 is larger than an upper limit threshold TH_High (S2123). When the TDC-measurement stage number Nm1 is larger than the upper limit threshold TH_High ("Yes" in S2123), the distance d1 calculated in S2121 is applied (S2124).

When the TDC-measurement stage number Nm1 is not larger than the upper limit threshold TH_High ("No" in S2123), it is determined whether the TDC-measurement stage number Nm1 is smaller than a lower limit threshold TH_Low (S2125). When the TDC-measurement stage number Nm1 is smaller than the lower limit threshold TH_Low ("Yes" in S2125), the distance d2 calculated in S2122 is applied (S2126).

When the TDC-measurement stage number Nm1 is not smaller than the lower limit threshold TH_Low ("No" in S2125), a weighting ratio is calculated (S2127). A weighting ratio W need only be calculated using, for example, the following equation:

$$W = (Nm1 - TH\_Low)/(TH\_High - TH\_Low) ... \text{(Equation 4)}.$$

Then, the weighting ratio calculated in S2127 is applied, and the weighted average process is applied to the distance d1 calculated in S2121 and the distance d2 calculated in S2122 to perform distance conversion (S2128). A distance d3 calculated by applying the weighted average process need only be calculated with the weighting ratio W using the following equation:

$$d3 = d1 \times W + d2 \times (1 - W) ... \text{(Equation 5)}.$$

That is, in the distance conversion process illustrated in Fig. 13, as the distance value, the distance d1 calculated by (Equation 2) is output when Nm1 > TH_High, the distance d2 calculated by (Equation 3) is output when Nm1 < TH_Low, and the distance d3 calculated by (Equation 5) is output when TH_Low $\leq$ Nm1 $\leq$ TH_High.

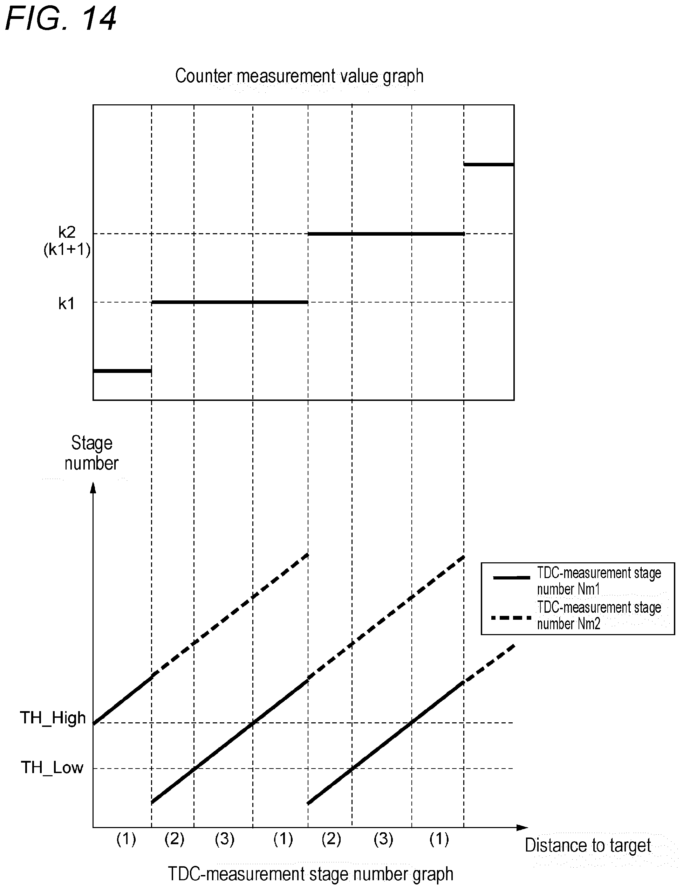

Fig. 14 is an example in which the relationship between the counter measurement value and the TDC-measurement stage numbers Nm1, Nm2 as a counter measurement value graph and a TDC-measurement stage number graph. As illustrated in Fig. 14, for example, it is assumed that the TDC-measurement stage numbers Nm1, Nm2 have been calculated corresponding to the counter measurement values k1, k2 (typically, k2 = k1 + 1).

Here, as described with reference to Fig. 13, when Nm1 > TH_High (the range of a predetermined section (1) illustrated in Fig. 14), the distance d1 calculated by (Equation 2) above using Nm1 is applied. When Nm1 < TH_Low (the range of a predetermined section (2) illustrated in Fig. 14), the distance d2 calculated by (Equation 3) above using Nm2 is applied. When TH_Low $\leq$ Nm1 $\leq$ TH_High (the range of a specific section (3) illustrated in Fig. 14), the distance d3 calculated by (Equation 5) above, to which the weighted average process of d1 and d2 has been applied, is applied.

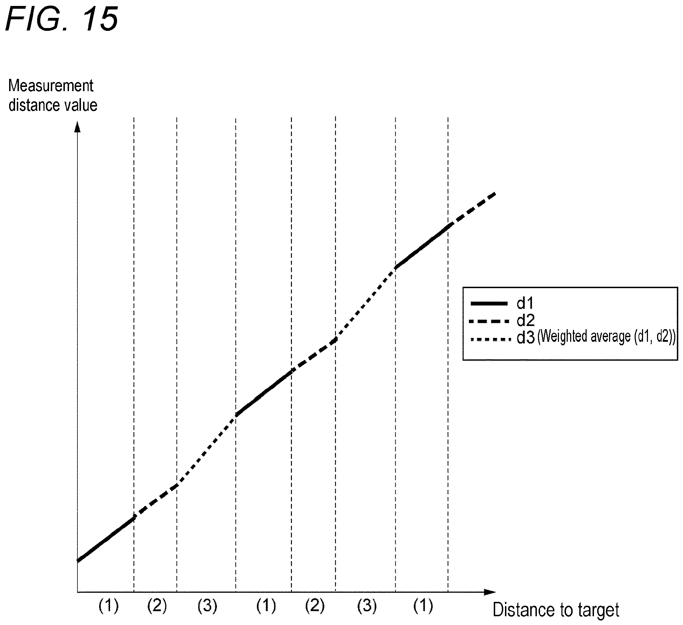

Fig. 15 is a graph illustrating a measured distance value calculated by the distance conversion process to which the weighted average process described with reference to Fig. 13 has been applied. As illustrated in Fig. 15, the distances d1, d2, d3 (weighted average of d1 and d2) are applied to the ranges of the predetermined sections (1), (2) and the specific section (3) illustrated in Fig. 14, respectively.

As described above, the distance d3 calculated by applying the weighted average process (the range of the specific section (3) illustrated in Fig. 15), approaches the distance d1 calculated by (Equation 2) above using Nm1 (the range of (1) illustrated in Fig. 15) and the distance d2 calculated by (Equation 3) above using Nm2 (the range of (2) illustrated in Fig. 15), while taking appropriate values. In other words, even when different calculation methods are used for the distances d1, d2, d3, it is possible to reduce a step that causes a rapid change in the measured distance value at the boundary of each of those distances.

Note that the upper limit threshold TH_High and the lower limit threshold TH_Low are the upper limit value and the lower limit value of the region to which the weighted average process is applied. For example, appropriate values need only be set in consideration of the range to which the distance d1 is applied (the range of the predetermined section (1) illustrated in Fig. 15), the range to which the distance d2 is applied (the range of the predetermined section (2) illustrated in Fig. 15), and the range to which the distance d3 is applied (the range of the specific section (3) illustrated in Fig. 15). The values need only be appropriately set while a rapid change in the measured distance value is avoided at and near the boundary of each of the predetermined sections (1), (2) and the specific section (3).

In the embodiment, when TH_Low $\leq$ Nm1 $\leq$ TH_High, the distance d3, calculated using (Equation 5) to which the weighted average process of d1 and d2 had been applied, has been output as the distance value, but the present invention is not limited thereto. Other calculation methods may be used as long as it is possible to reduce a rapid change in the measured distance value at and near the boundary of each of the predetermined sections (1), (2) and the specific section (3) illustrated in Fig. 15.

For example, when TH_Low $\leq$ Nm1 $\leq$ TH_High, the average of d1 and d2 may be set as the distance d3. In this case, although there is a possibility that a step that causes a rapid change in the measured distance value may occur at the boundary between the predetermined section (2) and the specific section (3) and the boundary between the specific section (3) and the predetermined section (1) illustrated in Fig. 15, the step can be reduced by calculating the average of d1 and d2. In addition, a process of calculating the weighting ratio W (S2127) illustrated in Fig. 13 becomes unnecessary, and hence the processing speed can be improved.

Instead of using a different calculation method for each section as described above, a method of constantly averaging the TDC-measurement stage numbers Nm1, Nm2, ..., and Nm (N) measured corresponding to a plurality of (N) timings to calculate the measured distance value may be used. In this case, although there is a possibility that a step that causes a rapid change in the measured distance value may occur at and near the boundary where the counter measurement value is switched, by averaging the plurality of (N) TDC-measurement stage numbers Nm1, Nm2, ..., and Nm (N), it is possible to reduce variation in the stage number due to noise and improve the distance measurement accuracy.

Returning to Fig. 12, when the distance conversion process S212 to which the weighted average process is applied ends, a distance offset process is performed (S213). For example, the distance value (measured distance value) calculated in step S212 is basically calculated on the basis of the time from when the detection light is emitted from the sensor device 100 toward the target TA to when the detection light is reflected and received. However, the offset process may be performed for the distance value (measured distance value) that is finally calculated in consideration of the delay time caused by the path for processing the optical signal and the electrical signal and by other various processes. The offset process performed on the distance value (measured distance value) calculated in step S212 may be set according to, for example, the performance, type, and specific configuration of each component forming the sensor device 100, the type of the target TA, the surrounding environment to be measured, and the like.

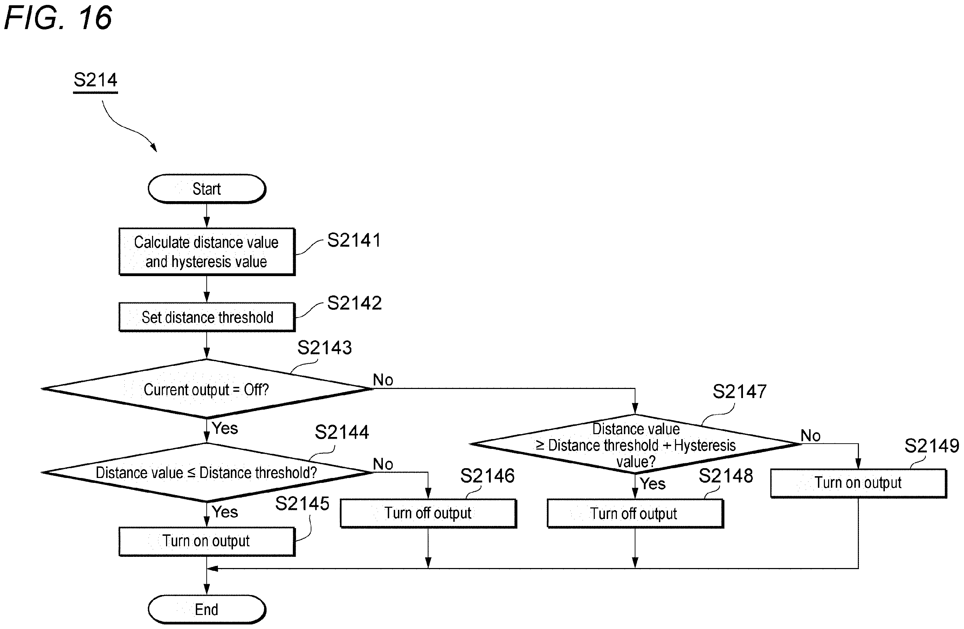

Next, the determiner 51 executes a determination process S214. Fig. 16 is a flowchart illustrating the determination process illustrated in Fig. 12. When the determination process S214 is started, as illustrated in Fig. 16, first, the determiner 51 calculates a distance value CDa and a hysteresis value Vhys on the basis of the near-side distance value CDn and the far-side distance value CDf input from the distance converter 38 via the interface 41 of the FPGA 30 (S2141).

The distance value CDa is an average value of the near-side distance value CDn and the far-side distance value CDf, and is expressed as (Equation 6) below:

$$\text{Distance value CDa} = (\text{Near-side distance value CDn} + \text{Far-side}$$

$$\text{distance value CDf})/2 \dots (\text{Equation 6}).$$

In the embodiment, the example in which the distance value CDa is an average value of the near-side distance value CDn and the far-side distance value CDf has been described, but the present invention is not limited thereto. The distance value CDa need only be any value calculated from the near-side distance value CDn and the far-side distance value CDf, and may be a value other than the average value.

The hysteresis value Vhys is expressed as (Equation 7) below using a magnification adjustment value Vm and an offset adjustment value Vo stored in advance in the memory or the like of the controller 50:

$$\text{Hysteresis value Vhys} = \{(\text{Far-side distance value CDf} - \text{Near-side}$$

$$\text{distance value CDn}) \times \text{Vm}\} + \text{Vo} \dots \text{(Equation 7)}.$$

Note that the magnification adjustment value Vm and the offset adjustment value Vo are not limited to the case of using the values stored in advance. For example, the magnification adjustment value Vm and the offset adjustment value Vo may be changeable by the user operating the operation unit 70.

Next, the determiner 51 sets a value input by the user operating the operation unit 70 as a distance threshold (S2142).

Next, the determiner 51 determines whether the current output is off (S2143). The output being off means that there is no target TA, and the output being on means that there is a target. The current output is a value set as a result of the immediately preceding determination process S214, that is, on or off, except when the determination process S214 is executed first. In preparation for the case where the determination process S214 is executed first, the initial value of the output is set to off.

As a result of the determination in step S2143, when the current output is off, the determiner 51 compares the distance value CDa calculated in step S2141 with the distance threshold set in step S2142, and determines whether or not the distance value CDa is equal to or less than the distance threshold (S2144). As a result of the determination in step S2144, when the distance value CDa is equal to or less than the distance threshold, the determiner 51 turns on the output (S2145). On the other hand, as a result of the determination in step S2144, when the distance value CDa is not equal to or less than the distance threshold, that is, when the distance value CDa is larger than the distance threshold, the determiner 51 turns off the output (S2146).

As a result of the determination in step S2143, when the current output is not off, that is, when the current output is on, it is considered that the target is determined to be present (the target has been detected) as a result of the immediately preceding determination process S214. Therefore, the determiner 51 compares the distance value CDa with the sum (total) of the distance threshold and the hysteresis value Vhys, and determines whether or not the distance value CDa is equal to or larger than the sum (total) of the distance threshold and the hysteresis value Vhys (S2147). As described above, when the immediately preceding determination result indicates the presence of the target, the presence or absence of the target is determined on the basis of the hysteresis value Vhys based on the absolute value of the difference between the near-side distance value CDn and the far-side distance value CDf, the distance value CDa calculated from the near-side distance value CDn and the far-side distance value CDf, and the predetermined distance threshold. Therefore, for example, by comparing the distance value CDa with the sum of the predetermined threshold distance value and the hysteresis value Vhys, it is possible to have a width (margin) in the determination for the hysteresis value Vhys, and to prevent sensitive reaction to changes in the distance value CDa calculated from the near-side distance value CDn and the far-side distance value CDf in the determination after the target is determined to be present.

As a result of the determination in step S2147, when the distance value CDa is equal to or larger than the sum of the distance threshold and the hysteresis value Vhys, the determiner 51 turns off the output (S2148). On the other hand, as a result of the determination in step S2147, when the distance value CDa is not equal to or greater than the sum of the distance threshold and the hysteresis value Vhys, that is, when the distance value CDa is less than the sum of the distance threshold and the hysteresis value Vhys, the determiner 51 turns on the output (S2149).

After step S2145, step S2147, step S2148, or step S2149, the determiner 51 ends the determination process S214. Then, after completing the determination process S214, the sensor device 100 ends the detection process S200.

Note that Fig. 16 illustrates the example in which the determiner 51 calculates the distance value CDa and the hysteresis value Vhys in step S2141, but the present invention is not limited thereto. For example, the distance converter 38 of the FPGA 30 may calculate the distance value CDa and the hysteresis value Vhys and input the distance value CDa and the hysteresis value Vhys to the determiner 51 via the interface 41. In each of the determination in step S2144 and step S2147, whether the case of equality is included may be changed by setting.

In the embodiment, the case where the measurement medium of the sensor device 100 is light has been described as an example, but the present invention is not limited thereto. The measurement medium of the sensor device 100 may be, for example, an electromagnetic wave, a sound wave, or the like. When an electromagnetic wave or a sound wave is used as a measurement medium, not only the distance to the target TA but also a change in the distance to the target TA can be measured.

In the embodiment, the example in which the sensor device 100 performs both the rough measurement and the fine measurement has been described, but the present invention is not limited thereto. For example, the sensor device may be configured to perform only one of the rough measurement and fine measurement.

As described above, according to the sensor device 100 and the detection method in the embodiment of the present invention, the counter measurer 32 generates the stop signal StpN (first timing) and the stop signal StpN' (second timing) at the timing one clock later, corresponding to the feature point of the binarization signal RT. The binarization signals input to and propagated through the TDC delay line measurer 33 are recorded in the flip-flop circuit 8 (first memory) and the flip-flop circuit 7 (second memory) on the basis of the stop signals StpN, StpN', respectively. Then, the waveform integrator 34 integrates the delay line output signals D1 to D4 (binarization signals recorded in the first memory) and D1'to D4' (binarization signals recorded in the second memory) from the TDC delay line measurer 33 in the first signal integrator 34-1 and the second signal integrator 34-2, corresponding to a plurality of times of light emission in the light emitter 10 to generate integration signals Dt1, Dt2. The distance converter 38 calculates the measured distance value on the basis of the TDC-measurement stage numbers Nm1, Nm2 calculated on the basis of the integration signals Dt1, Dt2, respectively, by the first stage number calculator 37-1 and the second stage number calculator 37-2 in the stage number calculator 37. As a result, the measured distance value to the target TA can be appropriately calculated, and the target can be detected more accurately.

At the boundary where the counter measurement value in the counter measurement value graph illustrated in Fig. 14 is switched, there has been a possibility that a step that causes a rapid change in the distance value (measured distance value) calculated by the distance converter 38 may occur. However, in the sensor device 100 and the detection method according to one embodiment of the present invention, a plurality of sets of integrated waveform data corresponding to a plurality of timings is generated, and the measured distance value to the target is calculated using appropriate integrated waveform data among the plurality of sets of integrated waveform data, for example, according to the predetermined sections (1), (2). As a result, it is possible to reduce a step that causes a rapid change in the measured distance value at the boundary of the predetermined sections (1), (2).

Furthermore, in the specific section (3), the measured distance value to the target is calculated by performing the weighted average process on the integrated waveform data used in each of the predetermined sections (1), (2) among the plurality of sets of integrated waveform data. As a result, it is possible to reduce a step that causes a rapid change in the measured distance value at the boundary of the predetermined sections (1), (2). As a result, at each of the boundaries (the boundary between the predetermined section (2) and the specific section (3) and the boundary between the specific section (3) and the predetermined section (1)) before and after the specific section (3), it is possible to reduce a step that causes a rapid change in the measured distance value to the target.

In the embodiment, the sampling has been performed twice while the light reception timing is shifted by generating a stop signal for one detection light projected from the sensor device 100 toward the target TA and then further generating a stop signal at the timing one clock later. However, the present invention is not limited thereto. For example, as a method of shifting the light reception timing, the shifted timing may be not only one clock later, but also two clocks later, or even further extended.

In addition, the sampling is not limited to twice, but may be three or more times, and the distance need only be converted by applying the distance calculated on the basis of the results of three or more times of integration (three or more TDC-measurement stage numbers), respectively, and the weighted average process.

Furthermore, a plurality of integration results (two or more TDC-measurement stage numbers) may be acquired using a method in which light reception sampling is performed while light reception timing is alternately switched for each detection light projected from the sensor device 100 toward the target TA, and light is received once for one detection light.

The embodiment described above is intended to facilitate understanding of the present invention, and is not intended to limit the present invention. Each element included in the embodiment and its arrangement, material, condition, shape, size, and the like are not limited to those exemplified, but can be appropriately changed. Further, it is possible to partially replace or combine the configurations shown in different embodiments.

[Appendix]

A sensor device (100) including:

a light emitter (10) configured to emit detection light toward a target;
a light receiver (20) configured to receive reflected light of the detection light and generates a binarization signal;
a counter measurer (32) configured to generate first and second timings on a basis of the binarization signal;
a delay line configured to receive and propagate the binarization signal;
first and second memories configured to record binarization signals propagated through the delay line on a basis of the first and second timing, respectively, the binarization signals each being the binarization signal;
an integrator (34) configured to generate first and second sets of integrated waveform data by integrating the binarization signals recorded in the first and second memories, respectively, corresponding to a plurality of times of light emission in the light emitter;
a distance converter (38) configured to calculate a measured distance value to the target on a basis of the first and second sets of integrated waveform data; and
a determiner (51) configured to determine presence or absence of the target on a basis of the measured distance value.

DESCRIPTION OF SYMBOLS

10 light emitter

11 light projecting element

15 light projecting circuit

20 light receiver

21 light receiving element

25 light receiving circuit

31 light projecting oscillator

32 counter measurer

33 TDC delay line measurer

34 waveform integrator

34-1 first signal integrator

34-2 second signal integrator

35 slope calculator

37 stage number calculator

37-1 first stage number calculator

37-2 second stage number calculator

38 distance converter

39 register

40 light projecting element temperature controller

41 interface

46 clock generator

50 controller

51 determiner

60 display

70 operation unit

100 sensor device

301, 302, 303, 304 TDC delay line

321 binarization signal captor

322 signal accumulator

323 stop signal determiner

324 stop timing manager

P1 pulse control signal

P2 power control signal

T1 measurement signal

T2 setting data

RT binarization signal

Ck clock signal

Str start signal

Dt, Dt1, Dt2 Integration signal

Nm1, Nm2 TDC-measurement stage number

Stp, Stp', Stp1, Stp1', Stp2, Stp2', Stp3, Stp3', Stp4, Stp4', StpN, StpN' 

stop signal

TA target

6, 6-1, 6-2, 6-3 delay element

7, 7-1, 7-2, 7-3, 8, 8-1, 8-2, 8-3 flip-flop circuit

D1, D2, D3, D4, D1', D2', D3', D4' delay line output signal

D1j, D2j, D3j, D4j delay line output signal

Q, Q1, Q2, Q3, Q', Q1', Q2', Q3' delay signal

PP1 light projection pulse

Pt pulse width

M1 measurement section

Mt certain period

RT1 to RT128 binarization signal

RTp partial waveform of binarization signal RT

Smp sampling signal

## EP 4 411 415 A1

Cn Counter integration signal

DL delay line measurement

Tcyc cycle

DS delay signal group

Whys hysteresis width

Wint integration number width

CDa distance value

Doff off point distance

Don on point distance

CDf far-side distance value

CDn near-side distance value

ITh, HTh, LTh integration threshold

**Claims**

1. A sensor device (100) comprising:

   a light emitter (10) configured to emit detection light toward a target;
   a light receiver (20) configured to receive reflected light of the detection light and generate a binarization signal;
   a counter measurer (32) configured to generate first and second timings on a basis of the binarization signal;
   a delay line (33) configured to receive and propagate the binarization signal;
   first and second memories configured to record binarization signals propagated through the delay line (33) on a basis of the first and second timing, respectively, the binarization signals each being the binarization signal;
   an integrator (34) configured to generate first and second sets of integrated waveform data by integrating the binarization signals recorded in the first and second memories, respectively, corresponding to a plurality of times of light emission in the light emitter (10);
   a distance converter (38) configured to calculate a measured distance value to the target on a basis of the first and second sets of integrated waveform data; and
   a determiner (51) configured to determine presence or absence of the target on a basis of the measured distance value.

2. The sensor device (100) according to claim 1, wherein the distance converter (38) calculates the measured distance value to the target, using one of the first and second sets of integrated waveform data according to a predetermined section.

3. The sensor device (100) according to any one of claims 1 to 2, wherein the distance converter (38) calculates the measured distance value to the target by combining and computing at least two or more of the first and second sets of integrated waveform data in a specific section.

4. The sensor device (100) according to claim 3, wherein the distance converter (38) calculates the measured distance value to the target by performing a weighted average process on the first and second sets of integrated waveform data in a specific section.

5. The sensor device (100) according to claim 1, wherein the counter measurer (32) generates the first timing on a basis of a feature point of the binarization signal, and generates a second timing from the first timing on a basis of a clock signal.

6. The sensor device (100) according to claim 5, wherein the second timing is one clock later than the first timing.

FIG. 1

FIG. 2

FIG. 3

EP 4 411 415 A1

# FIG. 4

<u>32</u>

FIG. 5

EP 4 411 415 A1

# FIG. 6

Light reception signal ................................................ RTp

RT1

RT2

RT3

.
.
.

RT128

Cn ----- Th

Smp

FIG. 7

EP 4 411 415 A1

# FIG. 8

EP 4 411 415 A1

EP 4 411 415 A1

# FIG. 9

# FIG. 10

EP 4 411 415 A1

FIG. 11

## FIG. 12

S200

```
            ┌──────────────┐
            │    Start      │
            └──────┬───────┘
                   ▼
        ┌──────────────────────┐
        │   Emit pulsed light   │── S201
        └──────────┬───────────┘
                   ▼
        ┌──────────────────────┐
        │ Sampling of binarization signal by │── S202
        │      counter measurer              │
        └──────────┬───────────┘
                   ▼
   No   ◇ N times of integration? ◇── S203
  ◄─────◇                        ◇
                   │ Yes
                   ▼
        ┌──────────────────────┐
        │   Detect cross point   │── S204
        └──────────┬───────────┘
                   ▼
        ┌──────────────────────┐
        │ Output stop signal as stop timing (K) │── S205
        └──────────┬───────────┘
                   ▼
        ┌──────────────────────┐
        │ Sampling of binarization signal by │── S206
        │   TDC delay line measurer          │
        │ (Integration by first signal integrator) │
        └──────────┬───────────┘
                   ▼
        ┌──────────────────────┐
        │ Output stop signal as stop timing (K') │── S207
        └──────────┬───────────┘
                   ▼
        ┌──────────────────────┐
        │ Sampling of binarization signal by │── S208
        │   TDC delay line measurer          │
        │ (Integration by second signal integrator) │
        └──────────┬───────────┘
                   ▼
   No   ◇ M times of integration? ◇── S209
                   │ Yes
                   ▼
        ┌──────────────────────┐
        │ Calculate TDC-measurement stage number from │── S210
        │ integration result of first signal integrator │
        └──────────┬───────────┘
                   ▼
        ┌──────────────────────┐
        │ Calculate TDC-measurement stage number from │── S211
        │ integration result of second signal integrator │
        └──────────┬───────────┘
                   ▼
        ┌──────────────────────┐
        │ Distance conversion process to which │── S212
        │ weighted average process is applied   │
        └──────────┬───────────┘
                   ▼
        ┌──────────────────────┐
        │  Distance offset process  │── S213
        └──────────┬───────────┘
                   ▼
        ┌──────────────────────┐
        │  Determination process    │── S214
        └──────────┬───────────┘
                   ▼
            ┌──────────────┐
            │     End       │
            └──────────────┘
```

# FIG. 13

**Start**

**S2121** — d1 = Counter measurement value k1 × Distance conversion constant A + TDC-measurement stage number Nm1 × Distance conversion constant B

**S2122** — d2 = (Counter measurement value k2 - 1) × Distance conversion constant A + TDC-measurement stage number Nm2 × Distance conversion constant B

**S212**

**S2123** — TDC-measurement stage number Nm1 > TH_High? — No / Yes

**S2125** — TDC-measurement stage number Nm1 < TH_Low? — No / Yes

**S2127** — W = (TDC-measurement stage number Nm1 - TH_Low)/(TH_High - TH_Low)

**S2124** — (1) Distance = d1

**S2126** — (2) Distance = d2

**S2128** — (3) Distance = d1 × W + d2 × (1 − W)

**End**

- TH_Low: lower limit threshold for weighted average region determination
- TH_High: upper limit threshold for weighted average region determination

EP 4 411 415 A1

## FIG. 14

Counter measurement value graph

TDC-measurement stage number graph

# FIG. 15

Measurement
distance value

d1
d2
d3 (Weighted average (d1, d2))

(1)  (2)  (3)  (1)  (2)  (3)  (1)    Distance to target

## FIG. 16

S214

```
          ┌──────────┐
          │  Start   │
          └────┬─────┘
               │
   ┌───────────────────────┐
   │ Calculate distance value │ ── S2141
   │   and hysteresis value   │
   └───────────┬───────────┘
               │
   ┌───────────────────────┐
   │ Set distance threshold │ ── S2142
   └───────────┬───────────┘
               │
```

S2143

Current output = Off?

No → S2147: Distance value ≥ Distance threshold + Hysteresis value?

Yes ↓

S2144: Distance value ≤ Distance threshold?

No → S2146: Turn off output

Yes ↓ S2145: Turn on output

S2148: Turn off output

S2149: Turn on output

End

Europäisches
Patentamt

European
Patent Office

Office européen
des brevets

# EUROPEAN SEARCH REPORT

Application Number

EP 23 21 7596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 875 986 A1 (OMRON TATEISI ELECTRONICS CO [JP]) 8 September 2021 (2021-09-08) | 1-3,5 | INV. G01S7/4865 G01S7/487 G01S17/14 G01S17/88 |
| Y | * paragraphs [0036] - [0063] * * paragraphs [0068], [0069] * * figures 1-7 * | 4,6 | |
| Y | EP 3 680 683 A1 (OMRON TATEISI ELECTRONICS CO [JP]) 15 July 2020 (2020-07-15) * paragraphs [0015], [0025], [0076] * | 4 | |
| Y | EP 2 438 469 B1 (KONINKLIJKE PHILIPS NV [NL]; PHILIPS IP & STANDARDS GMBH [DE]) 11 July 2018 (2018-07-11) * paragraphs [0019], [0022] * * figure 3 * | 6 | |

TECHNICAL FIELDS
SEARCHED (IPC)

G01S

The present search report has been drawn up for all claims

| Place of search | Date of completion of the search | Examiner |
|---|---|---|
| Munich | 22 May 2024 | Hirsch, Stefanie |

EPO FORM 1503 03.82 (P04C01)

## ANNEX TO THE EUROPEAN SEARCH REPORT
## ON EUROPEAN PATENT APPLICATION NO.

EP 23 21 7596

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | | Publication date | Patent family member(s) | | Publication date |
|---|---|---|---|---|---|
| EP 3875986 | A1 | 08-09-2021 | CN | 112654885 A | 13-04-2021 |
| | | | EP | 3875986 A1 | 08-09-2021 |
| | | | JP | 6990356 B2 | 12-01-2022 |
| | | | JP | 2020071098 A | 07-05-2020 |
| | | | US | 2021389458 A1 | 16-12-2021 |
| | | | WO | 2020090291 A1 | 07-05-2020 |
| EP 3680683 | A1 | 15-07-2020 | CN | 111033307 A | 17-04-2020 |
| | | | EP | 3680683 A1 | 15-07-2020 |
| | | | JP | 6838532 B2 | 03-03-2021 |
| | | | JP | 2019049430 A | 28-03-2019 |
| | | | US | 2020209395 A1 | 02-07-2020 |
| | | | WO | 2019049480 A1 | 14-03-2019 |
| EP 2438469 | B1 | 11-07-2018 | BR | PI1008279 A2 | 24-09-2019 |
| | | | CN | 102449503 A | 09-05-2012 |
| | | | EP | 2438469 A2 | 11-04-2012 |
| | | | JP | 5771195 B2 | 26-08-2015 |
| | | | JP | 2012528321 A | 12-11-2012 |
| | | | KR | 20120028337 A | 22-03-2012 |
| | | | RU | 2011153728 A | 10-07-2013 |
| | | | US | 2012068077 A1 | 22-03-2012 |
| | | | US | 2014336987 A1 | 13-11-2014 |
| | | | WO | 2010136910 A2 | 02-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023112554 A
- JP 2015075453 A

- JP 2020071098 A